# EUROPEAN PATENT APPLICATION

(11) **EP 0 837 417 A2**
(43) Date of publication of application: **22.04.1998**
(21) Application number: 97117999.9
(22) Date of filing: 17.10.1997
(51) Int. Cl.: G06K 7/10

(54) **Mechanism for reading a bar code**

(30) Priority: 21.10.1996 DE 19643334
(71) Applicant: EASTMAN KODAK COMPANY, Rochester, New York 14650 (US)
(72) Inventor: Hirsch, Alexander, 70323 Stuttgart (DE)
(74) Representative: Schmidt, Peter, Dipl.-Ing.

(57) **Abstract**

The invention concerns a mechanism for reading a bar code (BC) by means of a scanning device (1). To achieve a mechanism that on the one hand has a simple, compact design with low overall height, and on the other hand does not impede the reading motion of the scanning device (1), in particular does not tangle or tear out electrical connecting wires (18) connected to the scanning device, and moreover ensures reliable reading of a bar code (BC) arranged annularly on a stationary object (CD) in an automated environment, in order to read the bar code (BC) the scanning device (1) is movable by means of a movement device (2) on a circular path, and alignment means (3) are provided by means of which the scanning device (1) can be held in an unchanged alignment during its circular motion proceeding from an initial position (10).

## Description

The invention concerns a mechanism for reading an annularly arranged bar code by means of a scanning device.

Mechanisms of the aforesaid kind are known that are used to read data which are applied to a wide variety of objects, for example onto compact disks, on which this bar code is provided in a concentric arrangement around a rotation center point of the compact disk. The mechanism can, in this context, be a component of reproduction/recording or archiving units.

EP-A-0 575 893 discloses a mechanism for reading a bar code, arranged annularly around a rotation center point, of a compact disk, in which the transmitter and receiver of a scanning device are arranged in fixed and perpendicular fashion above the rotation center point of a stationary CD put in place for reading. In this context, the transmitter's light is conveyed on the one hand by means of a first light-guiding means (optical fiber or mirror system) and a lens onto the bar code, and on the other hand the signal reflected by the bar code is conveyed back to the receiver via the lens and by means of a second light-guiding means (optical fiber or mirror system). The light-guiding means and lenses are located on a carrier which is rotatable about a rotation axis which coincides with the rotation center point of the CD. To read the bar code, the carrier is caused to rotate by means of belt pulleys, V-belts, and a drive motor.

It is disadvantageous in this context that the exemplified embodiments described require a complex optical system or light/signal guidance arrangement to read the bar code, which moreover has a large overall height.

US-A-4,762,600 discloses a mechanism for reading a bar code, arranged annularly around a rotation center point, of a compact disk (CD), in which a scanning device with a transmitter and a receiver is arranged with an optical system in fixed and perpendicular fashion above the bar code applied on the outer rim of the compact disk. To read the bar code, the compact disk is rotated about its rotation center point by means of a drive unit.

It is disadvantageous here that in the case of a compact disk that is held in a disk holder and to which a rotating motion therefore cannot be imparted, the annularly arranged bar code is not readable with this stationary scanning device described.

It is therefore the object of the invention to create a mechanism of the kind described initially that on the one hand has a simple, compact design with low overall height, and on the other hand does not impede the reading motion of the scanning device, in particular does not tangle or tear out electrical connecting wires connected to the scanning device, and moreover ensures reliable reading of a bar code arranged annularly on a stationary object in an automated environment.

The object is achieved according to the invention, with a mechanism as defined in Claim 1, by the fact that to read the bar code the scanning device is movable by means of a movement device on a circular path, and alignment means are provided by means of which the scanning device can be held in an unchanged alignment during its circular motion proceeding from an initial position.

Advantageously the scanning device has, as integral components, a beam transmitter and a signal receiver, with or without an optical system arranged in each case in the beam path; the scanning device is arranged at a predefined axial distance perpendicular to the bar code; and the scanning device is arranged on a rotatable holder of the alignment means, such that the alignment means can be components of the movement device.

Advantageously, the movement device furthermore has a rotatable carrier element for the alignment means of the scanning device, the rotation axis of which lies at the center point of the annularly arranged bar code.

Moreover, the holder is advantageously arranged with its rotation axis at a radial distance from the rotation axis of the carrier element which corresponds to the distance between the annularly arranged bar code and its center point; and the holder performs a relative rotary motion with respect to the carrier element which is opposite to and of the same magnitude as the rotary motion of the carrier element.

It is favorable if the alignment means have an input drive wheel which is configured as a stationary bearing element, arranged in the rotation axis of the carrier element, for the carrier element and which serves to drive the holder; if the holder of the alignment means has an output drive wheel which has a diameter identical to that of the input drive wheel; and if the input and output drive wheels are configured in the form of belt pulleys which are in working engagement with one another by means of a first drive belt.

Or the alignment means have an input drive wheel which is configured as a rotating element, arranged in the rotation axis of the carrier element and rigidly joined to the carrier element, which serves to drive the holder; the holder of the alignment means has an output drive wheel which has a diameter identical to that of the input drive wheel; and the input and output drive wheels are configured in the form of gears which mesh with another in working engagement.

Further features and advantages are evident from the description of the exemplified embodiments of the invention depicted in the drawings, and from the further subclaims.

In the drawings,
- Fig. 1: shows the mechanism according to the invention in a perspective plan view, as a bar code arranged annularly on an object is being read;
- Fig. 2: shows the mechanism of Fig. 1 in a side view and partly in section along a section line A-A according to Fig. 1.

The description below refers to a preferred embodiment of the mechanism according to the invention for reading an annularly arranged bar code BC by means of a scanning device 1. The mechanism can be introduced into a unit (not depicted), preferably into a reproduction/recording unit of known type, for example an archiving unit or disk changer, and the bar code is arranged on an information medium that is preferably configured as a compact disk CD.

It is self-evident to one skilled in this art that annularly arranged bar codes applied onto other objects can also be read with the mechanism of the invention.

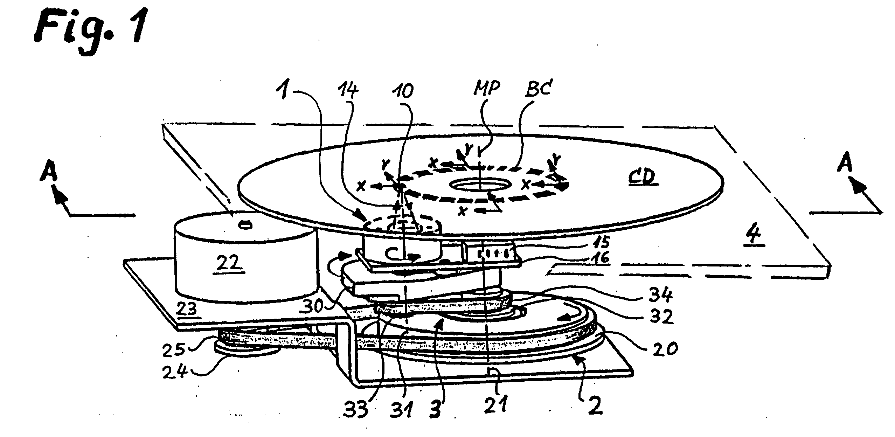

Fig. 1 shows the mechanism according to the invention in a position to read bar code BC arranged in annular and concentric fashion around a rotation center point MP of compact disk CD, in which the compact disk is held in a disk holder 4 above scanning device 1, the compact disk being stationary during the reading operation. The bar code is configured and applied onto the CD in a known manner.

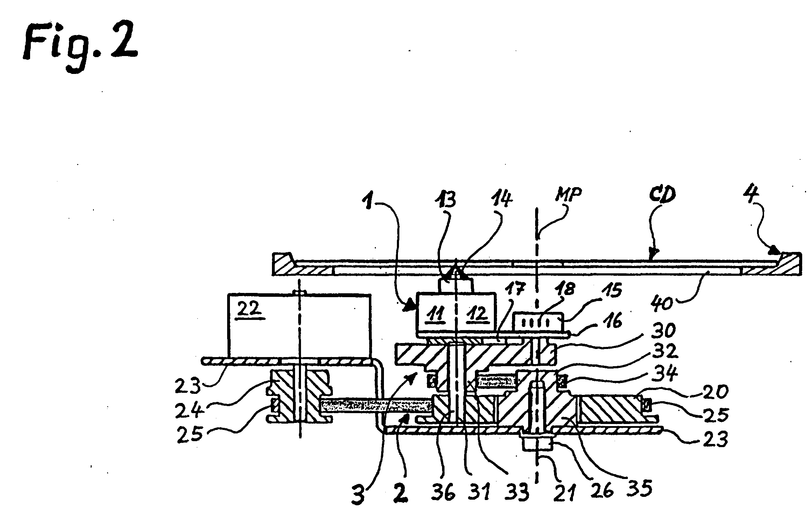

Disk holder 4, which can be transported in the horizontal direction by means of an ordinary transport device (not depicted), has in its bottom region, as shown in Fig. 2, a through opening 40 through which bar code BC alone, or the bar code and the region for stored image, text, or audio signals, are accessible for reading.

The mechanism consists, as shown in Figs. 1 and 2, of scanning device 1 as well as a movement device 2 and alignment means 3 for the scanning device, which are mounted together on a mounting plate 23.

In order to read bar code BC, scanning device 1 is movable, as depicted in Fig. 1, on a circular path by means of movement device 2; and alignment means 3 are provided in order to hold the scanning device, during its circular motion proceeding from an initial position 10, in an unchanged alignment, i.e. always in the same X-Y alignment, during a rotary motion of movement device 2 with scanning device 1 of up to 360 degrees, or during one rotary motion.

Scanning device 1 has, built into a cylindrical housing as integral components, a beam transmitter 11 in the form of a light-emitting diode and an optoelectronic signal receiver 12, each with an optical system 13 in the form of a lens arranged in beam path 14; the configuration is of a known kind, and is therefore not depicted in detail in Figs. 1 and 2.

In an alternative embodiment, the beam transmitter and signal receiver can be configured with a shared lens or without lens(es) or optics.

Scanning device 1 is arranged at a predefined axial distance perpendicular to bar code BC, i.e. for example in the instance depicted (Figs. 1 and 2) to the underside of the CD, at a distance which corresponds to the focal length.

Scanning device 1 is installed on a rotatable holder 30 of alignment means 3, which are components of movement device 2.

Movement device 2 has a rotatable carrier element 20 for alignment means 3, i.e. for at least holder 30 with scanning device 1, rotation axis 21 of the carrier element lying at center point MP of the annularly arranged bar code BC of compact disk CD. Holder 30 is arranged with its rotation axis 31 at a radial distance from rotation axis 21 of carrier element 20 which corresponds to the distance between the annularly arranged bar code BC and its center point.

As shown by the arrows in Fig. 1, when a rotary motion of carrier element 20 occurs, holder 30 performs a relative rotary motion with respect to carrier element 20 which is opposite to and of the same magnitude as the rotary motion of the carrier element. The rotation direction of holder 30 or scanning device 1 is determined by the reading direction of bar code BC.

As shown in Fig. 2, alignment means 3 have an input drive wheel 32 for holder 30 that is configured as a stationary bearing element 35 (lower half of the input drive wheel), arranged in rotation axis 21 of carrier element 20, for the carrier element; input drive wheel 32 is rigidly joined to bearing element 35 by means of a bolt 26 on mounting plate 23.

Holder 30 of alignment means 3 has an output drive wheel 33 which has a diameter identical to that of input drive wheel 32, and the input and output drive wheels are configured in the form of belt pulleys which are in working engagement with one another by means of a first drive belt 34 in order to drive holder 30. Output drive wheel 33 is arranged below holder 30 and joined rigidly thereto, or the holder and output drive wheel are configured as a single part, e.g. as an injection-molded plastic element.

Carrier element 20 is configured as output drive wheel 20 of movement device 2 in the form of a belt pulley that can be driven, by means of a second drive belt 25 and an input drive wheel 24 configured in the form of a further belt pulley and joined to a motor, with a microprocessor-controlled drive motor 22 that is mounted next to the carrier element on the mounting plate.

Rotation axis 31 of holder 30 or of output drive wheel 33 is, as depicted in Fig. 2, configured as a bearing stud 36 that is held, with a parallel and radial spacing away from rotation axis 21 of carrier element 20, pressed into a bore of carrier element 20. Holder 30 or its output drive wheel 33 is mounted rotatably, by means of its blind bore, on the bearing stud above the carrier element.

As is evident from Fig. 2, scanning device 1 is installed in the region around rotation axis 31 of holder 30 on a circuit board 16 that is fastened onto the holder by means of two screws 17. The electrical connections of scanning device 1 are connected by means of a plug connector 15 and connecting wires 18 to a microprocessor-controlled control unit (not depicted).

Connecting wires 18 of beam transmitter 11 and signal receiver 12 of scanning device 1 are arranged in the vicinity of rotation axis 21 of carrier element 20 and below compact disk CD in the vicinity of its center point MP; when a circular motion of scanning device 1 occurs by means of movement device 2, plug connector 15 and thus the connecting wires remain stationary in an unchanged X-Y alignment.

In a further embodiment (not depicted) of the mechanism, alignment means 3 have an input drive wheel 32 for holder 30 that is configured as a rotating element arranged in rotation axis 21 above carrier element 20 and rigidly joined to the carrier element.

In this instance, holder 30 of alignment means 3 has an output drive wheel 33 that has a diameter identical to that of input drive wheel 32. The input and output drive wheels are configured in the form of gears which mesh with one another in working engagement in order to drive holder 30.

Carrier element 20 is configured as output drive wheel 20 of movement device 2 in the form of a gear that can be driven with a microprocessor-controlled drive motor 22 by means of a further motor-mounted input drive wheel 24 configured in the form of a gear, the gears meshing with one another in working engagement.
- CD: Object/compact disk
- BC: Annularly arranged bar code
- MP: Center point/rotation center point (CD)
- 1: Scanning device
- 2: Movement device
- 3: Alignment means
- 4: Disk holder
- 10: Initial position (scanning device)
- 11: Beam transmitter
- 12: Signal receiver
- 13: Optical system
- 14: Beam path
- 15: Plug connector
- 16: Circuit board
- 17: Screw
- 18: Connecting wire
- 20: Carrier element, rotatable (movement device)
Output drive wheel, second (belt pulley or gear)
- 21: Rotation axis (carrier element)
- 22: Drive motor, microprocessor-controlled
- 23: ounting plate (carrier element and drive motor)
- 24: rive wheel, further (belt pulley or gear)
- 25: rive belt, second
- 26: Bolt
- 30: Holder, rotatable (alignment means)
- 31: Rotation axis (holder)
- 32: Input drive wheel (belt pulley or gear)
- 33: Output drive wheel (belt pulley or gear)
- 34: Drive belt, first
- 35: Bearing element for carrier element (part of input drive wheel)
- 36: Bearing stud for holder
- 40: Through opening (disk holder)

## Claims

1. A mechanism for reading an annularly arranged bar code (BC) by means of a scanning device (1), characterized in that to read the bar code (BC) the scanning device (1) is movable by means of a movement device (2) on a circular path, and alignment means (3) are provided by means of which the scanning device can be held in an unchanged alignment during its circular motion proceeding from an initial position (10).

2. The mechanism as defined in Claim 1, characterized in that the scanning device (1) has, as integral components, a beam transmitter (11) and a signal receiver (12), with or without an optical system (13) arranged in each case in the beam path (14); and that the scanning device is arranged at a predefined axial distance perpendicular to the bar code (BC) which corresponds to the focal length.

3. The mechanism as defined in Claim 1 or 2, characterized in that the scanning device (1) is arranged on a rotatable holder (30) of the alignment means (3); and that the alignment means (3) are components of the movement device (2).

4. The mechanism as defined in Claim 1 or 3, characterized in that the movement device (2) has a rotatable carrier element (20) for the alignment means (3) of the scanning device (1), the rotation axis (21) of which lies at the center point (MP) of the annularly arranged bar code (BC).

5. The mechanism as defined in Claims 3 and 4, characterized in that the holder (30) is arranged with its rotation axis (31) at a radial distance from the rotation axis (21) of the carrier element (20) which corresponds to the distance between the annularly arranged bar code (BC) and its center point; and that the holder (30) performs a relative rotary motion with respect to the carrier element (20) which is opposite to and of the same magnitude as the rotary motion of the carrier element.

6. The mechanism as defined in Claims 3 to 5, characterized in that the alignment means (3) have an input drive wheel (32) for the holder (30) which is configured as a stationary bearing element (26), arranged in the rotation axis (21) of the carrier element (20), for the carrier element; that the holder (30) of the alignment means (3) has an output drive wheel (33) which has a diameter identical to that of the input drive wheel (32); and that the input and output drive wheels are configured in the form of belt pulleys which are in working engagement with one another by means of a first drive belt (34) in order to drive the holder (30).

7. The mechanism as defined in Claims 3 to 5, characterized in that the alignment means (3) have an input drive wheel (32) for the holder (30) which is configured as a rotating element arranged in the rotation axis (21) of the carrier element (20) and rigidly joined to the carrier element; that the holder (30) of the alignment means (3) has an output drive wheel (33) which has a diameter identical to that of the input drive wheel (32); and that the input and output drive wheels are configured in the form of gears which mesh with another in working engagement in order to drive the holder (30).

8. The mechanism as defined in one of Claims 4 to 7, characterized in that the carrier element (20) is configured as the output drive wheel (20) of the movement device (2) in the form of a belt pulley that can be driven, by means of a second drive belt (25) and an input drive wheel (24) configured in the form of a belt pulley, with a microprocessor-controlled drive motor (22); or that the second input and output drive wheels are configured as gears which mesh with one another in working engagement.

9. The mechanism as defined in Claim 3 or 5, characterized in that the scanning device (1) is installed in the region around the rotation axis (31) of the holder (30); and that electrical connections (15) of the beam transmitter (11) and signal receiver (12) of the scanning device (1) are arranged in the vicinity of the rotation axis (21) of the carrier element (20), and the connecting wires thus remain stationary in an unchanged X-Y alignment when a circular motion of scanning device (1) occurs.

10. The mechanism as defined in one of Claims 1 to 9, characterized in that the bar code (BC) is provided on a compact disk (CD) in concentric arrangement around its rotation center point (MP); and that the compact disk rests in a disk holder (4) during reading of the bar code.
